# FASCICULE DE BREVET EUROPEEN

(11) **EP 2 239 829 B1**
(45) Date de publication et mention de la délivrance du brevet: **11.01.2017**
(21) Numéro de dépôt: 10159289.7
(22) Date de dépôt: 08.04.2010
(51) Int. Cl.: F04D 29/42, F04D 29/60, F04D 25/08, H02K 5/20

(54) **Support moteur pour un moteur d'entraînement d'un groupe moto-ventilateur d'un appareil de chauffage, de ventilation et/ou de climatisation, d'un véhicule automobile**
Motorgehäuse für einen Gebläsemotor für die Heizung, die Lüftung und/oder die Klimatisierung eines Kraftfahrzeuges
Motor support for a driving motor of a blower assembly for heating, cooling and/or air conditioning an automotive vehicle

(30) Priorité: 08.04.2009 FR 0901730
(43) Date de publication de la demande: 13.10.2010
(73) Titulaire: Valeo Systèmes Thermiques, 78321 Le Mesnil Saint Denis Cedex (FR)
(72) Inventeur: Pouysegur, Serge, 78610 Le Perray en Yvelines (FR); Truillet, Franck, 28410 Bu (FR); Ailloud, Fabrice, 78280 Guyancourt (FR)
(74) Mandataire: Metz, Gaëlle

(56) Documents cités:
- EP-A- 0 805 276
- WO-A-00/48293
- US-A1- 2007 147 995
- US-A1- 2007 177 996

## Description

L'invention est du domaine des installations de chauffage, de ventilation et/ou de climatisation, destinées à équiper un véhicule automobile. L'invention relève plus particulièrement des appareils de chauffage, de ventilation et/ou de climatisation aptes à assurer le traitement aérothermique d'un flux d'air destiné à être distribué dans un habitacle du véhicule automobile destiné à équiper une telle installation de chauffage, de ventilation et/ou de climatisation. L'invention a également pour objet un support moteur destiné à être faire partie intégrante d'un groupe moto-ventilateur équipant un tel appareil de chauffage, de ventilation et/ou de climatisation, un tel groupe moto-ventilateur et un appareil de chauffage, de ventilation et/ou de climatisation comprenant un tel groupe moto-ventilateur.

Les installations de chauffage, de ventilation et/ou de climatisation notamment destinées à équiper un véhicule automobile, mettent en oeuvre un ou plusieurs appareils de chauffage, de ventilation et/ou de climatisation aptes à générer un flux d'air propre à s'écouler. à travers des conduits pour la distribution du flux d'air dans un habitacle du véhicule. Les appareils de chauffage, de ventilation et/ou de climatisation sont notamment constitués d'un groupe moto-ventilateur générant le flux d'air et assemblé à une volute agencée dans un boîtier de l'appareil de chauffage, de ventilation et/ou de climatisation et conférant au flux d'air une dynamique appropriée. Le groupe moto-ventilateur est principalement constitué d'un moteur d'entraînement pour la mise en rotation d'une turbine apte à générer le flux d'air sous l'effet de sa mise en rotation. Le groupe moto-ventilateur comprend également un support moteur comportant un logement de réception du moteur d'entraînement et permettant d'assurer le maintien du moteur d'entraînement. A des fins d'assemblage, la face extérieure du support moteur est exploitée pour l'accostage du support moteur sur la volute et un organe d'étanchéité périphérique ménagé sur le support moteur vient en contact avec une surface extérieure de la volute pour éviter des fuites d'air.

Le moteur d'entraînement étant constitué de composants subissant un échauffement en cours d'utilisation, il est donc nécessaire, en conséquence, d'assurer le refroidissement du moteur d'entraînement pour permettre son bon fonctionnement.

A cet effet, il est courant d'exploiter le flux d'air circulant à l'intérieur de l'appareil de chauffage, de ventilation et/ou de climatisation pour refroidir le moteur d'entraînement. Pour ce faire, une fraction du flux d'air généré par le groupe moto-ventilateur est prélevée et acheminée vers le moteur d'entraînement. Le flux d'air est de préférence prélevé depuis l'intérieur de la volute, permettant ainsi d'exploiter une pression d'air élevée. Un ou plusieurs canaux de refroidissement acheminent le flux d'air prélevé vers le moteur d'entraînement du groupe moto-ventilateur, notamment au plus proche de la zone d'échauffement, généralement située à la base du moteur d'entraînement où se trouvent, de façon commune, les balais du moteur d'entraînement. Les canaux de refroidissement sont couramment conformés en rampes favorisant le guidage du flux d'air prélevé jusqu'à la base du moteur d'entraînement.

Une difficulté à surmonter réside dans l'agencement des rampes et leur intégration dans l'appareil de chauffage, de ventilation et/ou de climatisation. Il doit être pris en considération les contraintes liées à l'environnement de la zone d'implantation de l'appareil de chauffage, de ventilation et/ou de climatisation, et à la facilité de mise en place de l'appareil de chauffage, de ventilation et/ou de climatisation, notamment son encombrement. En particulier, il est recherché que les rampes n'induisent pas un accroissement du volume de l'appareil de chauffage, de ventilation et/ou de climatisation, et plus particulièrement des dimensions du groupe moto-ventilateur.

Par ailleurs, la mise en oeuvre de canaux de refroidissement pour l'acheminement du flux d'air prélevée vers la base du moteur d'entraînement ne doit pas faire obstacle à un montage aisé du groupe moto-ventilateur, et à l'assemblage du groupe moto-ventilateur avec la volute.

De plus, le support moteur comprenant les canaux de refroidissement et les rampes doit être obtenu aisément, notamment par moulage.

Enfin, la qualité et la fiabilité de l'étanchéité obtenue entre le groupe moto-ventilateur et la volute est importante pour un fonctionnement optimal de l'appareil de chauffage, de ventilation et/ou de climatisation. Ainsi, la mise en oeuvre de canaux de refroidissement pour l'acheminement du flux d'air prélevé depuis la turbine vers la base du moteur d'entraînement ne doit pas induire un risque de détérioration de l'étanchéité entre le groupe moto-ventilateur et la volute.

Il est connu de ménager les rampes sur le support moteur du groupe moto-ventilateur pour canaliser le flux d'air prélevé. Le support moteur forme un capot de fermeture axiale de la volute et les rampes comportent une entrée d'air débouchant sur le volume intérieur de la volute, à proximité de la base de la turbine. Les rampes sont formées de renforcements de la paroi interne du logement de réception du moteur d'entraînement, ces renforcements s'étendant depuis la volute vers la base du moteur d'entraînement. On pourra par exemple se reporter à la demande de brevet Français FR2831928.

Il a été également proposé de ménager les rampes aptes à guider le flux d'air prélevé sur la volute ménagées en saillie sur la volute, et s'étendent radialement vers le volume intérieur du support moteur. La volute est assemblée au groupe moto-ventilateur par emboîtement tournant. On pourra par exemple se reporter à la demande de brevet Européen EP0595336.

Cependant, dans les exemples de réalisation connus, l'étanchéité entre la volute et le support moteur peut être incertaine et/ou l'encombrement extérieur du support moteur ou de la volute être important. Par ailleurs, la volute et le support moteur présentent des formes complexes qui ne facilitent pas leur obtention aisée à moindres coûts.

La présente invention a pour objet un dispositif de refroidissement du moteur d'un groupe moto-ventilateur destiné à équiper un appareil de chauffage, de ventilation et/ou de climatisation selon la revendication 1, d'un véhicule automobile notamment. L'invention concerne notamment un support moteur comportant une face intérieure délimitant un logement de réception, apte à recevoir un moteur d'entraînement d'une turbine d'un groupe moto-ventilateur d'un appareil de chauffage, de ventilation et/ou de climatisation, une face extérieure formant au moins en partie une surface d'accostage comprenant un organe d'étanchéité périphérique, un rebord annulaire délimitant une extrémité supérieure du logement de réception et au moins un canal de refroidissement ménagé dans le support moteur apte à acheminer un flux d'air de refroidissement vers le moteur d'entraînement pour le refroidir, le canal de refroidissement étant muni d'une entrée d'air et d'une sortie d'air débouchant dans le logement de réception. Plus particulièrement, l'entrée d'air du canal de refroidissement est disposée, selon une direction axiale, entre un premier plan contenant au moins partiellement l'organe d'étanchéité périphérique et un deuxième plan contenant au moins partiellement le rebord annulaire.

La présente invention a pour but de répondre à l'ensemble des contraintes et difficultés à surmonter définies précédemment. Plus particulièrement, il est visé par la présente invention de proposer un groupe moto-ventilateur pourvu d'un support moteur qui permette de refroidir efficacement le moteur d'entrainement, tout en limitant l'encombrement du groupe moto-ventilateur et sans porter atteinte à la jonction étanche entre le groupe moto-ventilateur et la volute.

Avantageusement, l'entrée d'air du canal de refroidissement est disposée, selon une direction radiale, entre la face intérieure et la surface d'accostage du support moteur.

Les notions axiale et radiale sont à considérer au regard de la direction d'extension de l'axe du support moteur qui est, de façon préférentielle, parallèle ou confondu à l'axe du moteur d'entrainement et donc à l'axe de rotation de la turbine.

Prise dans le sens axial, la position de l'entrée d'air permet la mise en communication directe entre le canal de refroidissement et un volume intérieur de la volute, dans une zone à pression élevée. La mise en communication directe entre l'entrée d'air et le volume intérieur de la volute est réalisée sans avoir à prendre en compte un positionnement radial rigoureux entre le support moteur et la volute pour leur assemblage, et cela quel que soit le mode d'assemblage utilisé.

La position axiale et radiale de l'entrée d'air n'affecte pas l'étanchéité entre le support et la volute assemblés l'un à l'autre, l'entrée d'air étant située entre l'organe d'étanchéité périphérique et la turbine, en débouchant directement hors du support moteur et sur le volume intérieur de la volute, notamment latéralement,.

Prise dans le sens radial, la position de l'entrée d'air dans le volume intérieur de la paroi du logement de réception délimité entre la surface intérieure de réception du moteur d'entrainement et la surface d'accostage permet de réduire l'encombrement radial du support moteur.

La conformation du support moteur, notamment la forme de la surface d'accostage dédiée à la réception de la volute, est susceptible d'être quelconque. Plus particulièrement, le profil de la surface d'accostage est indifféremment de conformation circulaire ou polygonale. Plus particulièrement encore, l'extension axiale de la surface d'accostage est indifféremment régulière ou irrégulière, et/ou est indifféremment globalement orientée parallèlement ou transversalement à la direction d'extension du support moteur qui est, de façon préférentielle, parallèle ou confondu à l'axe du moteur d'entrainement et donc à l'axe de l'axe de rotation de la turbine.

Plus particulièrement, le premier plan est situé entre l'entrée d'air et la sortie d'air du canal de refroidissement.

Selon une variante de réalisation, le canal de refroidissement coopère avec une rampe d'alimentation. Dans cette configuration, la rampe d'alimentation prend, préférentiellement, naissance sur le rebord annulaire et s'incline en s'éloignant du rebord annulaire pour se raccorder progressivement à l'entrée d'air du canal de refroidissement.

En particulier, la rampe d'alimentation a une profondeur augmentant continûment depuis le rebord annulaire jusqu'au raccordement de la rampe d'alimentation avec l'entrée d'air. Notamment, l'entrée d'air est réalisée dans la surface d'accostage. Ainsi, préférentiellement, l'entrée d'air s'étend suivant la direction axiale depuis l'organe d'étanchéité jusqu'au rebord annulaire.

Selon diverses variantes respectives de réalisation, la surface définie par l'entrée d'air s'étend suivant un plan général orienté transversalement ou parallèlement par rapport à la direction d'extension du support moteur. Une telle orientation de l'entrée d'air offre une liberté d'agencement du canal de refroidissement à l'intérieur du support moteur. Une telle liberté est susceptible d'être mise à profit pour réduire l'épaisseur de la paroi du support moteur dans laquelle est ménagé le canal de refroidissement et/ou pour conformer le support moteur au mieux afin de permettre une obtention par moulage à moindres coûts.

La conformation de la surface délimitée par l'entrée d'air est susceptible d'être quelconque, et notamment pour être adaptée selon les performances aérauliques recherchées afin de capter le flux d'air de refroidissement utile au refroidissement du moteur d'entrainement. D'une manière générale, l'entrée d'air délimite une surface globalement plane notamment ménagée dans le support moteur et débouche sur le volume intérieur de la volute.

De préférence, l'entrée d'air débouche, dans son plan général, sur la face latérale extérieure du support moteur, et plus particulièrement sur la surface d'accostage. L'entrée d'air est avantageusement directement orientée vers le volume intérieur de la volute pour favoriser l'admission dans le canal de refroidissement du flux d'air utilisée pour le refroidissement du moteur d'entrainement.

Selon diverses variantes, l'organe d'étanchéité périphérique est constitué par un épaulement, par exemple agencé en lèvre ou en tout autre organe analogue d'étanchéité, contre lequel la volute est apte à prendre un appui élastique en position d'assemblage du groupe moto-ventilateur sur la volute. L'organe d'étanchéité est plus particulièrement disposé axialement dans le premier plan situé entre l'entrée d'air et la sortie d'air du canal de refroidissement.

L'agencement du canal de refroidissement selon la présente invention permet d'orienter l'entrée d'air vers le volume intérieur de la turbine, en la faisant déboucher sur la surface d'accostage.

La présente invention est propre également à un groupe moto-ventilateur comprenant un moteur d'entraînement d'une turbine agencé dans un logement de réception d'un support moteur tel que défini précédemment, et un appareil de chauffage, de ventilation et/ou de climatisation comprenant une volute assemblée avec un tel groupe moto-ventilateur.

De préférence, la volute intègre sur une face interne une rampe de guidage apte à guider le flux d'air de refroidissement prélevé dans la volute vers l'entrée d'air du canal de refroidissement ménagé dans le support moteur.

Cette disposition est telle que l'entrée d'air est directement orientée vers le volume intérieur de la volute, et qu'un acheminement du flux d'air de refroidissement vers le canal de refroidissement est possible sans induire un encombrement axial important du support moteur.

La volute est munie d'au moins une surface d'appui axial élastique contre l'organe d'étanchéité périphérique du support moteur. L'appui axial élastique est susceptible de résulter d'une déformation élastique de l'organe d'étanchéité périphérique sous l'effet de l'assemblage du groupe moto-ventilateur avec la volute. Par exemple, dans le cas où l'assemblage entre le groupe moto-ventilateur et la volute est réalisé par emboîtement, notamment par emboîtement tournant du type "à quart de tour" ou du type "baïonnette" ou analogue, une poussée axiale est exercée par la volute contre l'organe d'étanchéité périphérique, provoquant sa déformation. D'autres modalités de liaison étanche peuvent être mises en oeuvre entre le groupe moto-ventilateur et la turbine, à partir d'une mise en appui axial élastique entre l'organe d'étanchéité périphérique du support moteur et un organe de contre poussée agencé sur la volute.

Pour générer le flux d'air et permettre le captage du flux d'air de refroidissement, une admission d'air est ménagée dans la volute, notamment à travers une paroi de fermeture axiale qui coiffe la turbine et ferme la volute. L'admission d'air est notamment une admission d'air axiale ménagée en regard sur la turbine permettant l'introduction d'air depuis l'extérieur de l'appareil de chauffage, de ventilation et/ou de climatisation dans la turbine.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation, mais aussi, le cas échéant, contribuer à sa définition sur lesquels:

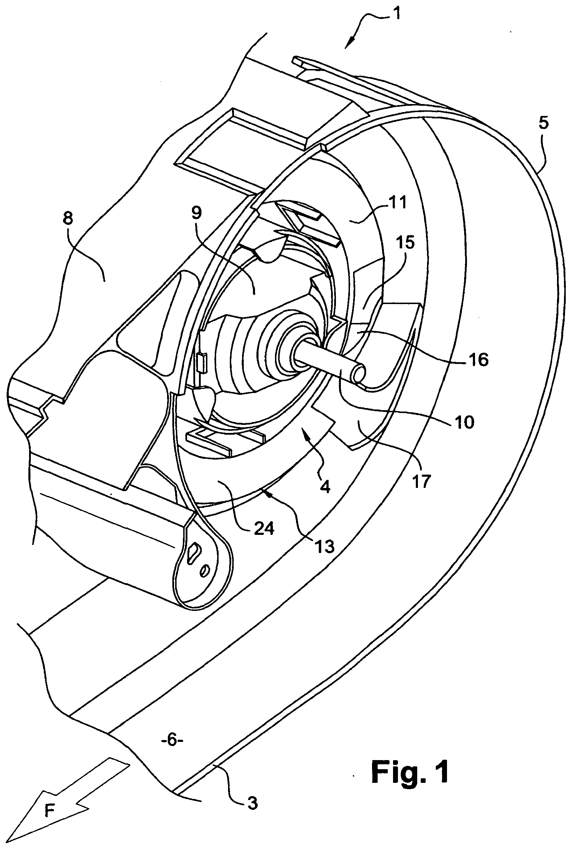

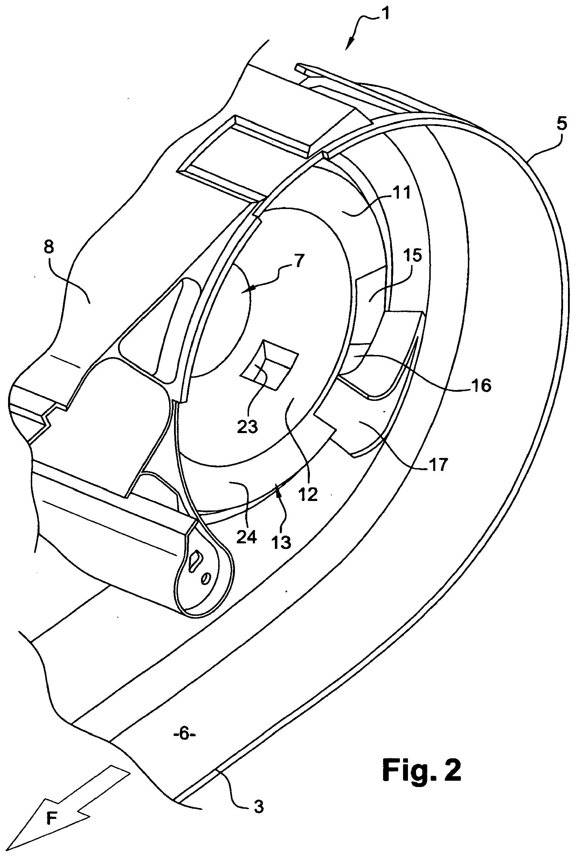

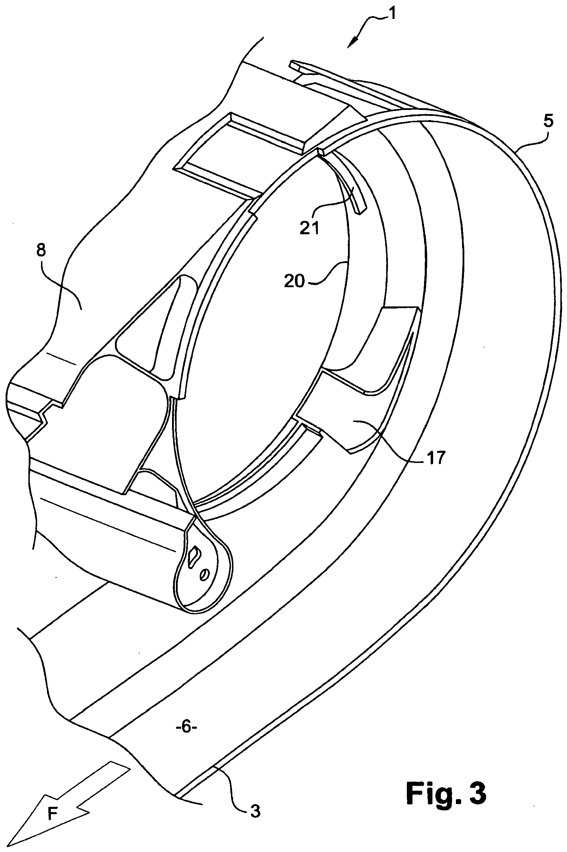

- les figures 1 à 3 sont des vues en perspective d'une partie d'un appareil de chauffage, de ventilation et/ou de climatisation équipé d'un groupe moto-ventilateur selon la présente invention, présentant respectivement, en figure 1, un boîtier de l'appareil de chauffage, de ventilation et/ou de climatisation comportant un support moteur logeant un moteur électrique ; en figure 2, le boîtier de l'appareil de chauffage, de ventilation et/ou de climatisation de la figure 1 comportant le support moteur sans le moteur d'entrainement; et en figure 3, le boîtier de l'appareil de chauffage, de ventilation et/ou de climatisation des figures 1 et 2 sans le groupe moto-ventilateur constitué du support moteur et du moteur d'entrainement,
- la figure 4 est une vue en perspective d'un support moteur destiné à un appareil de chauffage, de ventilation et/ou de climatisation selon la présente invention,
- La figure 5 est une vue schématique en coupe d'une partie de l'appareil de chauffage, de ventilation et/ou de climatisation selon la présente invention, et
- La figure 6 est une vue de détail de la figure 5.

Les figures 1 à 3 présentent une partie d'un appareil de chauffage, de ventilation et/ou de climatisation 1 destinée à équiper un véhicule automobile et logeant divers éléments contribuant au traitement aérothermique d'un flux d'air F destiné à être distribué dans un habitacle du véhicule par l'intermédiaire d'un conduit 3.

En particulier, l'appareil de chauffage, de ventilation et/ou de climatisation 1 est susceptible de loger un évaporateur (non représenté sur les figures) faisant partie d'une boucle de climatisation, formant avec l'appareil de chauffage, de ventilation et/ou de climatisation 1, une installation de chauffage, de ventilation et/ou de climatisation. De plus, l'appareil de chauffage, de ventilation et/ou de climatisation 1 est susceptible de loger un radiateur de chauffage (non représenté sur les figures) parcouru par un liquide de refroidissement du moteur du véhicule. De façon additionnelle, l'appareil de chauffage, de ventilation et/ou de climatisation 1 peut également comprendre un radiateur électrique d'appoint (non représenté sur les figures).

En mode de climatisation, le flux d'air F est dévié dans un passage en dérivation du radiateur de chauffage. En aval des radiateurs de chauffage et d'appoint, le conduit d'air 3 distribue l'air vers des bouches de sortie (non représentées sur les figures) s'ouvrant dans l'habitacle du véhicule. La distribution et le mixage éventuel de l'air se font à l'aide de volets commandés (non représentés).

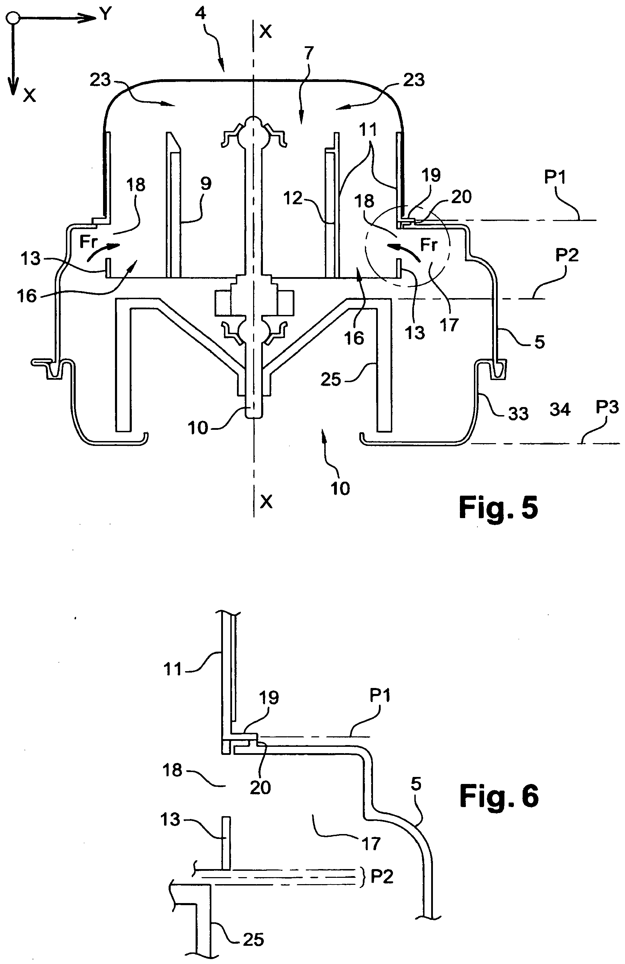

Tel que présenté sur la figure 1, l'appareil de chauffage, de ventilation et/ou de climatisation 1 comprend, entre autre, un groupe moto-ventilateur 4 propre à générer le flux d'air F dont les caractéristiques aérothermiques sont propres à être modifiées à l'intérieur de l'appareil de chauffage, de ventilation et/ou de climatisation 1. Une admission d'air 34, non représentée sur les figures 1 à 3 et schématisée sur la figure 5, permet l'admission d'un flux d'air extérieur et/ou recirculé à l'intérieur de l'appareil de chauffage, de ventilation et/ou de climatisation 1 pour générer le flux d'air F à traiter.

Le flux d'air F est acheminé à travers l'appareil de chauffage, de ventilation et/ou de climatisation 1. Le flux d'air F est canalisé par le conduit 3 vers divers composants logés dans l'appareil de chauffage, de ventilation et/ou de climatisation 1 pour modifier les caractéristiques aérothermiques du flux d'air F préalablement à la distribution du flux d'air F dans l'habitacle du véhicule.

L'installation de chauffage, de ventilation et/ou de climatisation est susceptible d'être équipée d'un ou de plusieurs appareil de chauffage, de ventilation et/ou de climatisation 1, chacun d'eux étant susceptibles d'être en relation avec un ou plusieurs conduits 3.

L'appareil de chauffage, de ventilation et/ou de climatisation 1 comporte un boîtier 8 propre à recevoir le groupe moto-ventilateur 4. Au moins une partie du boîtier 8 est conformée afin de former une volute 5. De façon préférentielle, le groupe moto-ventilateur 4 et la volute 5 sont assemblés axialement entre eux.

De plus, la volute 5 comporte au moins une sortie d'air 6 pour l'évacuation du flux d'air F hors de la volute afin d'être canalisé par le conduit 3 à travers l'appareil de chauffage, de ventilation et/ou de climatisation 1 vers les organes de traitement aérothermique.

L'entrée d'air 34 est conçue à travers une paroi venant fermer le boîtier 8 qui a été ôtée sur les représentations de la présente invention faites aux figures 1 à 3 afin de représenter l'intérieur du boîtier 8.

Sur la figure 1, le groupe moto-ventilateur 4 est assemblé sur la volute 5. Le groupe moto-ventilateur 4 comprend un moteur d'entraînement 9 propre à entraîner en rotation une turbine 25, non représentée sur les figures 1 à 3, par l'intermédiaire d'un arbre d'entraînement 10. Afin de générer le flux d'air F, la turbine 25 est disposée à l'intérieur de la volute 5. La turbine 25 est schématisée sur la figure 5.

Sur la figure 1, l'arbre d'entraînement 10 émerge hors du moteur d'entraînement 9 pour la réception axiale de la turbine 25. Le moteur d'entraînement 9 est logé dans un support moteur 11.

Selon une variante préférentielle de la présente invention, le support moteur 11 permet le maintien du moteur d'entraînement 9 et est également exploité pour le montage du groupe moto-ventilateur 4 sur le boîtier 8 de l'appareil de chauffage, de ventilation et/ou de climatisation 1, plus particulièrement sur une paroi de la volute 5.

Sur les figures 1 et 2, le support moteur 11 comprend un logement de réception 7, de forme cylindrique ou autre forme analogue, comportant une paroi intérieure 12 axialement étendue ménageant un évidement intérieur pour la réception axiale du moteur d'entraînement 9. Plus particulièrement, le logement de réception 7 du moteur d'entraînement 9 est définie par la face intérieure 12.

Par ailleurs, le support moteur 11 comporte un rebord annulaire 24 délimitant une extrémité supérieure du logement de réception 7. De plus, le rebord annulaire 24 entoure l'ouverture du logement de réception 7 du support moteur 11.

Enfin, le support moteur 11 comprend une paroi extérieure formant au moins en partie d'une surface d'accostage 13 pour l'assemblage du support moteur 11 sur le boîtier 8. Plus précisément, la surface d'accostage 13 est exploitée pour l'assemblage axial du groupe moto-ventilateur 4 et de la volute 5. La surface d'accostage 13 est une paroi extérieure du support moteur 11 définissant, avec la paroi intérieure 12, les limites, selon la direction radiale, du rebord annulaire 24.

Préférentiellement, la surface d'accostage 13 et la paroi intérieure 12 sont sensiblement cylindriques. Les axes d'évolution de la surface d'accostage 13 et de la paroi intérieure 12 sont parallèles entre eux ou confondus, la paroi intérieure 12 étant contenue dans le cylindre portant la surface d'accostage 13. Ainsi définie, il ressort que la surface d'accostage 13 présente un diamètre supérieur au diamètre de la paroi intérieure 12.

Sur l'exemple de réalisation illustré, le support moteur 11 est globalement de conformation cylindrique. Il doit être cependant compris que le support moteur 11 est susceptible d'être de conformation quelconque, s'étendant selon une direction axiale, et comporter notamment sur la paroi intérieure 12 des organes adaptés pour la réception du moteur d'entraînement 9. Le moteur d'entraînement 9 est immobilisé axialement et radialement à l'intérieur du support moteur 11.

Le refroidissement du moteur d'entraînement 9, et notamment de la partie du moteur d'entraînement 9 comportant des balais, généralement située au voisinage du fond du logement de réception 7 du support moteur 11, est assuré par prélèvement d'un flux d'air de refroidissement Fr dans la volute 5.

Le support moteur 11 comporte au moins un canal de refroidissement 16 permettant le prélèvement du flux d'air de refroidissement Fr à l'intérieur de la volute 5 pour être acheminée vers la base du moteur d'entraînement 9, en vue de son refroidissement.

Préférentiellement, les canaux de refroidissement 16 sont au nombre de deux sur l'exemple de réalisation illustré. Notamment, le nombre de canaux de refroidissement 16 correspond au nombre de balais du moteur d'entrainement 9. La présente invention n'est pas limitée en nombre de canaux de refroidissement 16 permettant de canaliser le flux d'air de refroidissement Fr afin de refroidir le moteur d'entrainement 9. Selon une alternative de réalisation, les canaux de refroidissement 16 sont radialement équi-répartis.

Les canaux de refroidissement 16 sont ménagés à l'intérieur de la paroi du support moteur 11. Les canaux de refroidissement 16 s'étendent principalement axialement et radialement dans l'épaisseur du support moteur 11. Ainsi, le flux d'air de refroidissement Fr est amené au fond du logement de réception 7 du support moteur 11 par les canaux de refroidissement 16 formés par des renfoncements 32 de la paroi du support moteur 11.

La figure 3 est une vue en perspective d'une partie d'un appareil de chauffage, de ventilation et/ou de climatisation équipé d'un groupe moto-ventilateur selon la présente invention présentant le boîtier de l'appareil de chauffage, de ventilation et/ou de climatisation dans laquelle le groupe moto-ventilateur a été ôté.

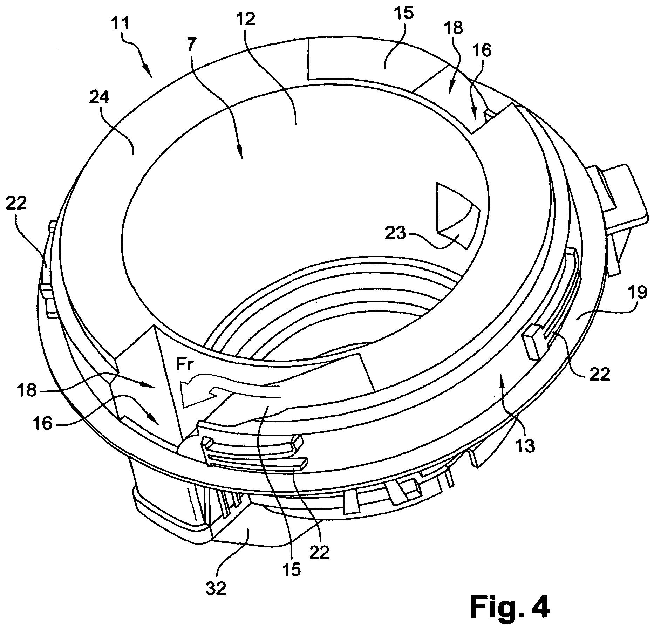

Tel que présenté sur la figure 3, afin de faciliter l'accès du flux d'air de refroidissement Fr dans les canaux de refroidissement 16, la volute 5 comporte au moins une rampe de guidage 17 favorisant le guidage du flux d'air de refroidissement Fr prélevé à la périphérie de la volute 5, en particulier dans une zone où la pression d'air est élevée, vers une entrée d'air 18, visible sur la figure 4, du canal de refroidissement 16 ménagé dans le support moteur 11.

Le canal de refroidissement 16 comporte une première partie formée du renfoncement 32 formant une goulotte, dont la section est par exemple sensiblement en U, s'ouvrant vers l'intérieur du logement de réception 7 du support moteur 11 par une sortie d'air 23. Selon une variante de réalisation, le renfoncement 32 s'étend dans une direction radiale.

De plus, selon le mode de réalisation préférée de la présente invention, chaque canal de refroidissement 16 coopère avec une rampe d'alimentation 15 ménagée par des déformations localisées du rebord annulaire 24. La rampe d'alimentation 15 prend naissance sur le rebord annulaire 24 et s'incline en s'éloignant du rebord annulaire 24 pour se raccorder progressivement à l'entrée d'air 18 du canal de refroidissement 16. La rampe d'alimentation 15 constitue une surface de guidage d'écoulement du flux d'air de refroidissement Fr. Ainsi, la rampe d'alimentation 15 a une profondeur qui augmente continûment depuis le rebord annulaire 24 jusqu'au raccordement de la rampe d'alimentation 15 avec le renfoncement 32 au niveau de l'entrée d'air 18.

Selon une autre forme de réalisation non représentée, le support moteur 11 est dépourvu de rampes d'alimentation 15 et comporte uniquement au moins un canal de refroidissement 16.

Toutefois, selon les contraintes géométriques du groupe moto-ventilateur 4 ou d'implantation dans l'appareil de chauffage, de ventilation et/ou de climatisation 1, il est possible que le canal de refroidissement 16 ait des formes courbes selon des directions radiale et axiale.

Il ressort de la présente invention que le nombre de rampes de guidage 17 est, préférentiellement, égal au nombre de canaux de refroidissement 16. Néanmoins, il est envisageable d'avoir un nombre de rampes de guidage 17 inférieur ou supérieur au nombre de canaux de refroidissement 16 par l'intermédiaire d'une géométrie adaptée du support moteur 11 permettant de canaliser le flux d'air de refroidissement Fr depuis les rampes de guidage 17 vers les canaux de refroidissement 16.

Avantageusement, les rampes de guidage 17 sont ménagées latéralement dans le volume intérieur de la volute 5 dans la face interne de la volute 5.

La figure 4 est une vue en perspective du support moteur 11 destiné à un appareil de chauffage, de ventilation et/ou de climatisation 1 selon la présente invention. Tel qu'illustrée, la surface d'accostage 13 du support moteur 11 comporte un organe d'étanchéité périphérique 19, contre lequel prend élastiquement appui une surface d'appui 20 de la volute 5 , schématisé sur la figure 5, lors de l'assemblage axial entre le groupe moto-ventilateur 4 et la volute 5. De façon avantageuse, l'organe d'étanchéité périphérique 19 est réalisé par un épaulement agencé en périphérie de la surface d'accostage 13 du support moteur 11.

Des moyens d'assemblage sont prévus pour la mise en coopération de la volute 5 et du groupe moto-ventilateur 4, notamment par un emboîtement tournant. Les moyens d'assemblage mettent en oeuvre au moins un ergot 21 en saillie ménagé sur la volute 5 qui coopère avec une glissière de guidage 22 ménagée sur la surface d'accostage 13 du support moteur 11. Un tel emboîtement tournant peut être du type "baïonnette".

De façon préférentielle, la volute 5 comporte une pluralité d'ergots 21 coopérant avec un nombre identique de glissières de guidage 22 agencées sur la surface d'accostage 13 du support moteur 11.

Après assemblage, les ergots 21 et les glissières de guidage 22 provoquent une poussée et une contre poussée axiales entre la volute 5 et le support moteur 11. L'appui axial entre le support moteur 11 et la volute 5 lors de l'assemblage est élastique sous l'effet d'une légère déformation de l'organe d'étanchéité périphérique 19 contre la surface d'appui 20. A cet effet et de façon avantageuse, l'organe d'étanchéité périphérique 19 est intégré de moulage au support moteur 11. La prise d'appui élastique permet l'obtention d'une jonction étanche entre la volute 5 et le groupe moto-ventilateur 4.

La figure 5 est une vue schématique en coupe d'une partie de l'appareil de chauffage, de ventilation et/ou de climatisation 1 selon la présente invention. La figure 6 montre plus particulièrement une vue de détail de la figure 5.

En se référant à la figure 5, selon la présente invention, la position respective de l'entrée d'air 18 du canal de refroidissement 16 est définie, selon une direction axiale, entre un premier plan P1 contenant l'organe d'étanchéité périphérique 19 et un deuxième plan P2 disposé entre une base inférieure de la turbine 25 et le rebord annulaire 24. La base inférieure de la turbine 25 correspond à une couronne de la turbine 25 ayant une face orientée vers le moteur d'entrainement 9.

Alternativement, le deuxième plan P2 contient la base inférieure de la turbine 25 ou le rebord annulaire 24. De plus, le deuxième plan P2 peut prendre toutes les positions intermédiaires entre les deux positions définies précédemment.

Selon la forme et l'évolution de l'organe d'étanchéité périphérique 19 et/ou du rebord annulaire 24, il est envisageable que l'organe d'étanchéité périphérique 19 ne soit pas contenu en totalité dans le premier plan P1 et/ou le rebord annulaire 24 ne soit pas contenu en totalité dans le deuxième plan P2. Toutefois, la présente invention couvre également des modes de réalisation dans lesquelles l'organe d'étanchéité périphérique 19 et/ou du rebord annulaire 24 n'ont pas un profil d'évolution contenu dans un plan.

Ainsi, selon la présente invention, le premier plan P1 contient au moins partiellement l'organe d'étanchéité périphérique 19 et le deuxième plan P2 contient au moins partiellement le rebord annulaire 24.

De façon préférée, le premier plan P1 est disposé perpendiculairement à un axe X-X du logement de réception 7 du support moteur 11 et passe par au moins un point de l'organe d'étanchéité périphérique 19 et le deuxième plan P2 est disposé perpendiculairement à l'axe X-X du logement de réception 7 du support moteur 11 et passe par au moins un point du rebord annulaire 24, de sorte que l'organe d'étanchéité périphérique 19 et le rebord annulaire 24 soient entièrement agencés dans l'espace compris entre le premier plan P1 et le deuxième plan P2.

Enfin, le premier plan P1 et le deuxième plan P2 peuvent être orientés selon des directions quelconques de sorte que le premier plan P1 et le deuxième plan P2 ne soient pas perpendiculaires à l'axe X-X du logement de réception 7 du support moteur 11.

Selon une direction radiale, la position respective de l'entrée d'air 18 du canal de refroidissement 16 est définie entre la face intérieure 12 du support moteur 11 définissant le logement de réception 7 du moteur d'entrainement 9 et la surface d'accostage 13 du support moteur 11.

Une telle disposition permet d'assurer une fiabilité de la jonction étanche entre la volute 5 et le groupe moto-ventilateur 4, et d'obtenir de manière certaine un passage optimisé du flux d'air de refroidissement Fr prélevée à l'intérieur de la volute 5 vers les canaux de refroidissement 16 du moteur d'entrainement 9.

En outre, les coûts d'obtention par moulage de la volute 5 et du support moteur 11 sont réduits à partir d'une réduction de la rigueur des tolérances de fabrication, notamment en ce qui concerne de tels écarts de tolérances angulaires.

Tel que présentée sur la figure 4, l'entrée d'air 18 du canal de refroidissement 16 débouche latéralement sur la surface d'accostage 13. L'entrée d'air 18 du canal de refroidissement 16 s'étend angulairement et axialement sur la surface d'accostage 13.

Plus particulièrement, l'entrée d'air 18 s'étend axialement depuis l'épaulement 19 jusqu'au rebord annulaire 24 du support moteur 11 en regard de la base inférieure de la turbine 25.

Lorsque le canal de refroidissement 16 comporte une rampe d'alimentation 15, l'entrée d'air 18 débouche axialement sur le rebord annulaire 24. Dans cette configuration, l'entrée d'air 18 s'étend également angulairement et radialement sur le rebord annulaire 24.

Ainsi représentée, la volute 5 est fermée en regard de la turbine 25, opposée à la base de la turbine, par une paroi de fermeture 33 qui coiffe la turbine 25 à l'opposée de la base inférieure de la turbine 25. La paroi de fermeture 33 comporte une ouverture constituant l'admission d'air 34 en regard sur la turbine 25.

De façon avantageuse, l'admission d'air 34 est comprise dans un troisième plan P3 de façon à ce que l'entrée d'air 18 du canal de refroidissement 16 agencé dans le support moteur 11 soit disposées entre le premier plan P1 contenant l'organe d'étanchéité périphérique 19 et le troisième plan P3 contenant l'admission d'air 34.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Appareil de chauffage, de ventilation et/ou de climatisation (1) comprenant une volute (5) assemblée avec un groupe moto-ventilateur (4) comportant un moteur d'entraînement (9) d'une turbine (25) agencé dans un logement de réception (7) d'un support moteur (11) comportant une paroi intérieure (12) délimitant ledit logement de réception (7), apte à recevoir un moteur d'entraînement (9) d'une turbine (25) d'un groupe moto-ventilateur (4) dudit appareil de chauffage, de ventilation et/ou de climatisation (1), une paroi extérieure formant au moins en partie une surface d'accostage (13) comprenant un organe d'étanchéité périphérique (19), un rebord annulaire (24) délimitant une extrémité supérieure du logement de réception (7) et au moins un canal de refroidissement (16) ménagé dans le support moteur (11) apte à acheminer un flux d'air de refroidissement (Fr) vers le moteur d'entraînement (9) pour le refroidir, le canal de refroidissement (16) étant muni d'une entrée d'air (18) et d'une sortie d'air (23), la sortie d'air (23) débouchant dans le logement de réception (7),
**caractérisé en ce que** la volute (5) comporte au moins une rampe de guidage (17) apte à guider le flux d'air de refroidissement (Fr) prélevé dans la volute (5) vers l'entrée d'air (18) du canal de refroidissement (16) ménagé dans le support moteur (11) disposée, selon une direction axiale, entre un premier plan (P1) contenant au moins partiellement l'organe d'étanchéité périphérique (19) et un deuxième plan (P2) contenant au moins partiellement le rebord annulaire (24).

2. Appareil de chauffage, de ventilation et/ou de climatisation (1) selon la revendication 1, **caractérisé en ce que** l'entrée d'air (18) du canal de refroidissement (16) est disposée, selon une direction radiale, entre la face intérieure (12) et la surface d'accostage (13) du support moteur (11).

3. Appareil de chauffage, de ventilation et/ou de climatisation (1) selon la revendication 1 ou 2, **caractérisé en ce que** le premier plan (P1) est situé entre l'entrée d'air (18) et la sortie d'air (23) du canal de refroidissement (16).

4. Appareil de chauffage, de ventilation et/ou de climatisation (1) selon l'une quelconque des revendications précédentes, **caractérisé en ce que** le canal de refroidissement (16) coopère avec une rampe d'alimentation (15).

5. Appareil de chauffage, de ventilation et/ou de climatisation (1) selon la revendication 4, **caractérisé en ce que** la rampe d'alimentation (15) prend naissance sur le rebord annulaire (24) et s'incline en s'éloignant du rebord annulaire (24) pour se raccorder progressivement à l'entrée d'air (18) du canal de refroidissement (16).

6. Appareil de chauffage, de ventilation et/ou de climatisation (1) selon la revendication 5, **caractérisé en ce que** la rampe d'alimentation (15) a une profondeur augmentant continûment depuis le rebord annulaire (24) jusqu'au raccordement de la rampe d'alimentation (15) avec l'entrée d'air (18).

7. Appareil de chauffage, de ventilation et/ou de climatisation (1) selon l'une quelconque des revendications précédentes, **caractérisé en ce que** l'entrée d'air (18) débouche dans la surface d'accostage (13).

8. Appareil de chauffage, de ventilation et/ou de climatisation (1) selon la revendication 7, **caractérisé en ce que** l'entrée d'air (18) s'étend, suivant la direction axiale, depuis l'organe d'étanchéité (19) jusqu'au rebord annulaire (24).

9. Appareil de chauffage, de ventilation et/ou de climatisation (1) selon l'une quelconque des revendications précédentes, **caractérisé en ce que** l'organe d'étanchéité périphérique (19) est constitué par un épaulement.

10. Appareil de chauffage, de ventilation et/ou de climatisation (1) selon l'une quelconque des revendications précédentes, **caractérisé en ce que** la rampe de guidage (17) est,ménagée latéralement dans une face interne de la volute (5).

11. Appareil de chauffage, de ventilation et/ou de climatisation selon l'une quelconque des revendications précédentes, **caractérisé en ce que** la volute (5) est munie d'au moins une surface d'appui (20) élastique contre l'organe d'étanchéité (19) du support moteur (11).

## Patentansprüche

1. Heizungs-, Lüftungs- und/oder Klimatisierungsgerät (1), das ein Spiralgehäuse (5) enthält, welches mit einem Gebläsemotor (4) zusammengebaut ist, der einen Antriebsmotor (9) einer Turbine (25) aufweist, der in einem Aufnahmesitz (7) eines Motorträgers (11) angeordnet ist, welcher eine Innenwand (12), die den Aufnahmesitz (7) begrenzt, der fähig ist, einen Antriebsmotor (9) einer Turbine (25) eines Gebläsemotors (4) des Heiz-, Lüftungs-, und/oder Klimatisierungsgeräts (1) aufzunehmen, eine Außenwand, die mindestens zum Teil eine Anlegefläche (13) bildet, die ein umlaufendes Abdichtorgan (19) enthält, eine ringförmige Randleiste (24), die ein oberes Ende des Aufnahmesitzes (7) begrenzt, und mindestens einen im Motorträger (11) ausgesparten Kühlkanal (16) aufweist, der einen Kühlluftstrom (Fr) zum Antriebsmotor (9) befördern kann, um ihn zu kühlen, wobei der Kühlkanal (16) mit einem Lufteinlass (18) und mit einem Luftauslass (23) versehen ist, wobei der Luftauslass (23) im Aufnahmesitz (7) mündet,
**dadurch gekennzeichnet, dass** das Spiralgehäuse (5) mindestens eine Führungsrampe (17) aufweist, die den im Spiralgehäuse (5) entnommenen Kühlluftstrom (Fr) zum Lufteinlass (18) des im Motorträger (11) ausgesparten Kühlkanals (16) führen kann, der gemäß einer axialen Richtung zwischen einer ersten Ebene (P1), die mindestens teilweise das umlaufende Abdichtorgan (19) enthält, und einer zweiten Ebene (P2) angeordnet ist, die zumindest teilweise die ringförmige Randleiste (24) enthält.

2. Heizungs-, Lüftungs- und/oder Klimatisierungsgerät (1) nach Anspruch 1, **dadurch gekennzeichnet, dass** der Lufteinlass (18) des Kühlkanals (16) gemäß einer radialen Richtung zwischen der Innenseite (12) und der Anlegefläche (13) des Motorträgers (11) angeordnet ist.

3. Heizungs-, Lüftungs- und/oder Klimatisierungsgerät (1) nach Anspruch 1 oder 2, **dadurch gekennzeichnet, dass** die erste Ebene (P1) sich zwischen dem Lufteinlass (18) und dem Luftauslass (23) des Kühlkanals (16) befindet.

4. Heizungs-, Lüftungs- und/oder Klimatisierungsgerät (1) nach einem der vorhergehenden Ansprüche, **dadurch gekennzeichnet, dass** der Kühlkanal (16) mit einer Versorgungsrampe (15) zusammenwirkt.

5. Heizungs-, Lüftungs- und/oder Klimatisierungsgerät (1) nach Anspruch 4, **dadurch gekennzeichnet, dass** die Versorgungsrampe (15) auf der ringförmigen Randleiste (24) beginnt und sich von der Randleiste (24) weg neigt, um sich progressiv mit dem Lufteinlass (18) des Kühlkanals (16) zu verbinden.

6. Heizungs-, Lüftungs- und/oder Klimatisierungsgerät (1) nach Anspruch 5, **dadurch gekennzeichnet, dass** die Versorgungsrampe (15) eine Tiefe hat, die durchgehend ausgehend von der ringförmigen Randleiste (24) bis zur Verbindung der Versorgungsrampe (15) mit dem Lufteinlass (18) zunimmt.

7. Heizungs-, Lüftungs- und/oder Klimatisierungsgerät (1) nach einem der vorhergehenden Ansprüche, **dadurch gekennzeichnet, dass** der Lufteinlass (18) in die Anlegefläche (13) mündet.

8. Heizungs-, Lüftungs- und/oder Klimatisierungsgerät (1) nach Anspruch 7, **dadurch gekennzeichnet, dass** der Lufteinlass (18) sich gemäß der axialen Richtung vom Abdichtorgan (19) bis zur ringförmigen Randleiste (24) erstreckt.

9. Heizungs-, Lüftungs- und/oder Klimatisierungsgerät (1) nach einem der vorhergehenden Ansprüche, **dadurch gekennzeichnet, dass** das umlaufende Abdichtorgan (19) aus einer Schulter besteht.

10. Heizungs-, Lüftungs- und/oder Klimatisierungsgerät (1) nach einem der vorhergehenden Ansprüche, **dadurch gekennzeichnet, dass** die Führungsrampe (17) seitlich in einer Innenseite des Spiralgehäuses (5) ausgespart ist.

11. Heizungs-, Lüftungs- und/oder Klimatisierungsgerät nach einem der vorhergehenden Ansprüche, **dadurch gekennzeichnet, dass** das Spiralgehäuse (5) mit mindestens einer elastischen Auflagefläche (20) gegen das Abdichtorgan (19) des Motorträgers (11) versehen ist.

## Claims

1. Heating, ventilation and/or air conditioning apparatus (1) comprising a volute (5) assembled with an electric fan set (4) comprising a drive motor (9) of a turbine (25) arranged in a reception housing (7) of a motor support (11) comprising an inner wall (12) delimiting said reception housing (7), capable of receiving a drive motor (9) of a turbine (25) of an electric fan set (4) of said heating, ventilation and/or air conditioning apparatus (1), an outer wall at least partly forming a docking surface (13) comprising a peripheral sealing member (19), an annular flange (24) delimiting a top end of the reception housing (7) and at least one cooling channel (16) formed in the motor support (11) capable of routing a flow of cooling air (Fr) to the drive engine (9) to cool it, the cooling channel (16) being provided with an air inlet (18) and an air outlet (23), the air outlet (23) emerging in the reception housing (7),
**characterized in that** the volute (5) comprises at least one guiding ramp (17) capable of guiding the flow of cooling air (Fr) taken from the volute (5) to the air inlet (18) of the cooling channel (16) formed in the motor support (11) arranged, in an axial direction, between a first plane (P1) at least partially containing the peripheral sealing member (19) and a second plane (P2) at least partially containing the annular flange (24).

2. Heating, ventilation and/or air conditioning apparatus (1) according to Claim 1, **characterized in that** the air inlet (18) of the cooling channel (16) is arranged, in a radial direction, between the inner face (12) and the docking surface (13) of the motor support (11).

3. Heating, ventilation and/or air conditioning apparatus (1) according to Claim 1 or 2, **characterized in that** the first plane (P1) is situated between the air inlet (18) and the air outlet (23) of the cooling channel (16).

4. Heating, ventilation and/or air conditioning apparatus (1) according to any one of the preceding claims, **characterized in that** the cooling channel (16) co-operates with a supply ramp (15).

5. Heating, ventilation and/or air conditioning apparatus (1) according to Claim 4, **characterized in that** the supply ramp (15) begins on the annular flange (24) and is inclined with increasing distance away from the annular flange (24) to be progressively connected to the air inlet (18) of the cooling channel (16).

6. Heating, ventilation and/or air conditioning apparatus (1) according to Claim 5, **characterized in that** the supply ramp (15) has a depth that increases continually from the annular flange (24) to the connection of the supply ramp (15) with the air inlet (18).

7. Heating, ventilation and/or air conditioning apparatus (1) according to any one of the preceding claims, **characterized in that** the air inlet (18) emerges in the docking surface (13).

8. Heating, ventilation and/or air conditioning apparatus (1) according to Claim 7, **characterized in that** the air inlet (18) extends, in the axial direction, from the sealing member (19) to the annular flange (24).

9. Heating, ventilation and/or air conditioning apparatus (1) according to any one of the preceding claims, **characterized in that** the peripheral sealing member (19) consists of a shoulder.

10. Heating, ventilation and/or air conditioning apparatus (1) according to any one of the preceding claims, **characterized in that** the guiding ramp (17) is formed laterally in an inner face of the volute (5).

11. Heating, ventilation and/or air conditioning apparatus according to any one of the preceding claims, **characterized in that** the volute (5) is provided with at least one elastic bearing surface (20) for bearing against the sealing member (19) of the motor support (11).
